# EUROPEAN PATENT APPLICATION

(11) **EP 0 699 392 A2**
(43) Date of publication of application: **06.03.1996**
(21) Application number: 95401998.0
(22) Date of filing: 30.08.1995
(51) Int. Cl.: A21D 2/02, A21D 2/14

(54) **Novel encapsulated leavening acid composition**

(30) Priority: 02.09.1994 US 300024
(71) Applicant: RHONE-POULENC INC., Monmouth Junction, New Jersey 08852 (US)
(72) Inventor: Chung, Frank H.Y., Langhorne, PA (US); Lavault, Sylvie Marie-Pierre, F-69003 Lyon (FR)
(74) Representative: Ricalens, François

(57) **Abstract**

A composition of matter comprising:
(a) one or more leavening acids; and
(b) a coating surrounding said one or more leavening acids;
   said coating comprising:
   (1) a barrier composition; and
   (2) a surface active agent or plasticizer material is disclosed.

## Description

### Background of the Invention

### 1. Field of the Invention

The present invention relates to leavening acid compositions for baked goods and more particularly leavening acids which are encapsulated by a composition which includes both a barrier material and a surface active agent.

### 2. Technology Description

Chemical leavening systems have been known for over 100 years. The replacement of yeast to induce process of fermentation by a carbonate alkali which is subjected the neutralizing action of an acid has reduced the amount of time and materials required for the preparation of baked goods. From this early beginning various leavening systems have been invented and sold as baking powders which contain not only the leavening alkali and the acid employed to neutralize the acid, but also fillers which enabled convenient measurement, handling and storage of such baking powders.

Leavening systems have long been known to comprise two basic ingredients. The first, of course, is the leavening acid such as cream-of-tartar, various phosphoric acids such as orthophosphoric acid, pyrophosphoric acid and the partial salts thereof such as monocalcium phosphate, sodium acid pyrophosphate, and any other suitable, edible, non-toxic acid which would not impart an undesirable taste to the resultant baked goods. Such acids have been known as "acidulants", or "baking acids" but more commonly as "leavening acids".

When added to a moist batter or dough, the acid reacts with a carbon dioxide liberating compound included in the batter or dough to yield the gas necessary for leavening. The rate of gas evolution is an important consideration determining largely the volume, density and texture qualities which will be imparted to the final baked product. This rate must occur within rather narrow limits for some applications such as in the preparation of prepared, canned dough for biscuits. Also, leavening requirements differ widely among the various baked goods for each of these demands a particular speed of evolution to ensure highest quality products. One of the principal factors with respect to the speed of evolution of carbon dioxide is the reactivity of the carbon dioxide producing material.

It has been known to regulate the speed of carbon dioxide evolution by control of the reactivity of the leavening acid. Numerous attempts to control the speed of reaction of the leavening acid are known in the art. Typical examples include U.S. Pat. No. 3,034,899 to Tucker wherein a finely divided calcium salt is combined with the acid to control the speed of reaction.

Calcium salts have been employed in chemical leavening systems from its earliest days. A typical example of such use is found in U.S. Pat. No. 315,831 to Peters. However, such calcium salts as taught in Peters are relatively slow acting and have not provided satisfactory performance as the carbonate factor particularly in comparison with the alkali metal salts. Although calcium salts such as calcium carbonate have been employed for various purposes such as preservatives for the leavening acid, etc. as noted in U.S. Pat. Nos. 4,388,336 and 4,526,801, such carbonates do not provide the reactivity desired for a carbonate factor in baked goods.

U.S. Patent No. 3,492,128 discloses the coating of citric, fumaric, adipic, tartaric , or malic acids or gluccnic-delta-lactone with hydrogenated peanut, cottonseed, coconut, babassu, or tucum oils so that the oil comprises about 15% of the total weight. A granular mixture is produced wherein the leavening acids remains inactive until the melting point of the coating material is reached during baking.

ES 8401775 is directed to coating fine particles of sodium bicarbonate raising agent with a solution of a cellulose ether mixture consisting of (1) hydroxypropylmethyl cellulose with 4-12% 2-hydroxypropyl groups, and (2) ethyl cellulose with 45-49.5% ethoxy groups. An acidic raising agent is coated with the same composition and two coated powders are mixed in approximately stoichiometric amounts. The moisture content of the baking powder is below 5%.

JP 60-141227 is directed to an acidic agent coated with a sparingly water-soluble substance. Acidic agents disclosed include ammonium alum, burnt ammonium alum, alum, burnt alum, fumaric acid, ammonium chloride, glucono-delta-lactone, acidic potassium pyrophosphate, tartaric acid, potassium tartarate, sodium fumarate, potassium hydrogentartarate and potassium phosphate.

It is a primary objective when using leavening acids to modulate and control the carbon dioxide liberation kinetics to yield a suitable final baked good product. More particularly, it is desirable to limit the reactive effect of water with the leavening acid. Ideally, the leavening acid would be designed so that it would not be reactive at the time of kneading or cold storing of the dough but would be reactive during heating, where the leavening of the final product takes place.

Particularly useful leavening acids are phosphate materials, and more specifically monocalcium phosphate. This acid is considered desirable as a commercial candidate as it does not possess sodium. While monocalcium phosphate does not possess sodium it has been difficult to adequately control its reaction rate which results in the release of carbon dioxide bases at various stages during the baking cycle. the fundamental problem with the use of monocalcium phosphate is that it liberates gas at too fast a desired rate. As a result, its commercial use has generally been limited to being a part of a leavening acid blend. Such blends can be less than optimal because they either may contain sodium, for example blends of monocalcium phosphate with sodium aluminum phosphate or sodium pyrophosphate, or may not have a completely bland taste.

The use of so-called "coated" monocalcium phosphate where the monocalcium phosphate has a thin coating of phosphate surrounding its acid core is known in the art. However, the "coating" does not provide the reaction kinetics that is ideally preferred and typically can only be used as part of a blend composition.

Accordingly, it would be desirable to produce a monocalcium phosphate leavening acid whose release rate properties can be tightly controlled for opitmal use for a multiple of baking applications.

### Brief Summary of the Invention

In accordance with the present invention, leavening acid compositions which have excellent controlled release properties for reaction with leavening bases during various stages in the baking of baked goods are provided. The acid compositions are particularly characterized by being encapsulated in a material which enables the desired release properties.

One embodiment of the present invention comprises a composition of matter comprising:
(a) one or more leavening acids; and
(b) a coating surrounding said one or more leavening acids; said coating comprising:
   (1) a barrier composition; and
   (2) a surface active agent or a plasticizer material.

In particularly preferred embodiments, the leavening acid comprises anhydrous monocalcium phosphate, the barrier composition is selected from the group consisting of glyceryl monopalmitostearate; a mixture of ethylcellulose, coconut oil, ammonium hydroxide and oleic acid; and gelatin; and the surface active agent is selected from the group consisting of sucroesters, polyoxyethylene sorbitan esters and mixtures thereof. The coating may also include both a surface active agent and a plasticizer material to further enhance the release properties and the coating is preferably applied to the leavening acid by utilizing fluidized bed encapsulation techniques.

Another embodiment of the present invention comprises a baking mix for preparing an edible baked good including a composition of matter comprising:
(a) one or more leavening acids; and
(b) a coating surrounding said one or more leavening acids; said coating comprising:
   (1) a barrier composition; and
   (2) a surface active agent or plasticizer material.

The baking mix may be used to prepare a cake, muffin, doughnut, bread, pastry, cookie, brownie, hush puppy, pancake, waffle, pizza crust or roll.

Still another embodiment of the present invention comprises encapsulated monocalcium phosphate wherein the encapsulating material is not solely a phosphate.

Accordingly, it is an object of the present invention to provide a composition useful as a leavening acid which has excellent stability and release properties.

It is another object of the present invention to provide a baking mix using the novel leavening acid composition.

These, and other objects, will readily be apparent to those skilled in the art as reference is made to the detailed description of the preferred embodiment.

### Detailed Description of the Preferred Embodiment

In describing the preferred embodiment, certain terminology will be utilized for the sake of clarity. Such terminology is intended to encompass the recited embodiment, as well as all technical equivalents which operate in a similar manner for a similar purpose to achieve a similar result.

The main focus of the present invention is to develop leavening acid compounds which have desirable control release properties so that the acid would be released only when the proper time in the baking cycle takes place. More particularly, the liberation of carbon dioxide should take place either by an input of water to a baking mixture containing the leavening acid compound, by the elevation of temperature during heating or by the combined effect. Conversely, it is desired that the acid not prematurely release carbon dioxide gas during the preparation of the baking mix, or subsequent dough, for example, during the kneading phase, or while it is being stored prior to baking. The present invention accomplishes the above criteria by encapsulating the leavening acid in a protective coating which includes both a barrier material and a surface active agent and/or plasticizer material.

The leavening acid which forms the core of the core/shell compounds formed in the present invention can be any of the following materials: monocalcium phosphate, monohydrate; monocalcium phosphate, anhydrous; sodium aluminum phosphate; a mixture of sodium aluminum phosphate with monocalcium phosphate; a mixture of sodium aluminum phosphate with aluminum sulfate; sodium acid pyrophosphate; sodium aluminum sulfate; potassium aluminum sulfate; ammonium alums; sodium alums; potassium alums; monosodium phosphate; monopotassium phosphate; tartaric acid; citric acid; fumaric acid; and glucono-delta-lactone.

Particularly preferred is the use of phosphate materials, and in particular monocalcium phosphate, in either its hydrated or, even more preferably, its anhydrous form.

In practice, the core leavening acid comprises between about 50 and about 98 percent by weight of the coated leavening acid compound, preferably between about 75 and about 95 by weight of the compound.

The core leavening acid typically has a mean particle size of between about 20 and about 200 microns, with particle sizes ranging from about 30 to about 120 microns or from about 50 to about 200 microns being commercially available.

The coating material is made from at least a barrier material and a surface active agent and/or plasticizer. The combination of both types of materials results in the production of coatings which are capable of providing the above-described release properties.

The first component of the coating is a barrier material. The primary criteria for selecting suitable barrier materials is that they be food grade materials and are capable of being selectively permeated by water and/or heat to liberate carbon dioxide from the core acid.

Examples of barrier materials which may be selected include the following: fatty acids, polyglycerol esters of fatty acids, monoglycerides, diglycerides, gelatins, starches derived from corn, wheat, potato or milo vegetables, zein proteins, sucroesters, sucroglycerides, cellulose ethers, cellulose esters, chitin, chitosan, amylopectin, hydrocolloids and mixtures thereof.

Specific barrier materials include the following generic materials, along with, where appropriate, trade names that the materials are presently sold under: glyceryl esters of long chain fatty acids such as glyceryl monopalmitostearate (Geleol - Gattefosse Company), glyceryl palmitostearate (Biogapress - Gattefosse Company), and polyglyceryl palmitostearate (Plurol WL1009 - Gattefosse Company); acetylated monoglycerides such as monoacetylated monoglycerides (Myvacet 5-07 - Eastman Kodak Company); hemisynthetic glycerides (Suppocire A and Suppocire D - Gattefosse Company); sucroglycerides derived from fatty oils such as coprah oil (Celynol LMO - Rhône-Poulenc SA), palm oil (Celynol MSPO 11 - Rhône-Poulenc SA), hydrogenated palm oil (Celynol MPSO 11H - Rhône-Poulenc SA), and hydrogenated soybean oil; cellulose acetate phthalate (Aquateric CD910 - FMC Corp.); modified celluloses such as ethylcellulose aqueous dispersions (Aquacoat - FMC Corp.), and hydroxyl propylcellulose (Klucel EF - Aqualon Company); sucrose esters of fatty acids having a HLB value of between about 7-15 such as palmitate (Sucroester 15 - Gattefosse Company), and distearate (Sucroester 11 - Gattefosse Company); mixture of ethylcellulose, coconut oil, ammonium hydroxide and oleic acid (Surelease -Colorcon Company); gelatin (100, 175 and 250 bloom strength); starches such as high amylose corn starch (Hylon VII), pregelatinized corn starch (Ultratex 1), modified corn starch (Ultracet LT), waxy maize starch (Colflo 67), pregelatinized waxy maize starch (Instant Clearjel), modified waxy maize starch (Purity Gum 1773); gums such as carrageenan gum (Carrageenan IOTA), pectin gum (Unipectin HMI), guar gum, locust bean gum, and xanthan gum; long chain fatty acids having a carbon chain length of between about 9 and about 21 carbon atoms such as capric acid, laurlc acid, myristic acid, tridecylclic acid; gelatins having a bloom strength of greater than 100 (e.g., 100, 175, 250) and mixtures thereof.

Particularly preferred is the use of glyceryl monopalmitostearate; a mixture of glycerides and one or more fatty acids; a mixture of ethylcellulose, coconut oil, ammonium hydroxide and oleic acid; and sucroglycerides derived from fatty oils.

The other component of the coating is a surface active agent or plasticizer material. These materials can function to reduce the thickness and provide flexibility to the barrier material when applied to the core leavening acid and thereby enable the production of a controlled release material. The key criteria to be considered when selecting such materials is that they be a food grade material and able to provide an optimally sized coating.

More particularly, the surface active agent functions to provide a uniformly distributed coating of the barrier material to produce a strong thin coating whereas the plasticizer functions to help provide coatings which are thin, strong and do not easily break. Particularly preferred is the use of both surface active agents and plasticizer materials.

Examples of surface active agents which may be selected include the following: sucroesters, sucroglycerides, propylene glycol monoesters, ethoxylated monoglycerides, ethoxylated diglycerides, glycerol lacto ester of fatty acids, lecithin, polyoxyethylene sorbitan esters, sorbitan esters of fatty acids, stearoyl-2-lactylate, polyoxyethylene esters of fatty acids such as stearic acid, acetylated monoglycerides and mixtures thereof. Particularly preferred are sucroesters, polyoxyethylene sorbitan esters, specifically polyoxyethylene sorbate monooleate and mixtures thereof. Such materials are commercially available under the names of Sucroester 7 from the Gattefosse Company (sucrose distearate) and Tween 80 (polyoxyethylene sorbate monooleate).

Several of the barrier materials, particularly the sucroesters can additionally function as the surface active agents. Other materials which have multiple functions include mono and diglycerides, polyoxyethylene esters of long chain fatty acids such as polyoxyethylene sorbate monooleate, sorbitan monoesters of long chain fatty acids and gelatins.

Preferred plasticizers include acetyl tributyl citrate (Citroflex A4) , acetyl triethyl citrate (Citroflex A2), tricalcium phosphate, dicalcium phosphate and diethylphthalate. These materials function to produce very thin coatings, i.e., the entire coating comprising no more than 2 to about 10 percent by weight of the entire core/shell material.

In practice, the barrier material is between about 80 and about 100 percent by weight of the coating material, and more preferably between about 90 and about 95 percent by weight of the coating material. Further, the coating typically has a thickness ranging between about 3 and about 20 microns, more preferably between about 5 and about 10 microns.

In another embodiment, where monocalcium phosphate is the leavening acid, the coating can take the form of any food grade encapsulating material with the proviso that the encapsulating material not solely be a phosphate material.

To apply the coating to the leavening acid, any method which is commonly used to encapsulate solid food grade materials may be selected. Examples of such methods include fluidized bed coating, coacervation, interfacial polycondensation polymerization, spray coating, pan coating, solvent film coating, and the like. Particularly preferred is the use of fluidized bed coating.

Under such a coating method, the core leavening acid, typically in the form of a powder is placed in a fluidized bed apparatus, preferably equipped top or bottom spray nozzles. A dispersion containing the coating material is then pumped into and atomized in the apparatus on the fluidized particle bed, typically by a hot air current. In practice, the solvent used to form the coating dispersion is typically water, although other solvents such as alcohols and glycols could be used.

The application of the dispersion to the powder typically takes between 15 minutes and 4 hours, depending on the thickness of the coating film desired. The coated material powder is then dried, typically for between about 1 minute and 1 hour, resulting in the production of a coating of the coating material onto all external surfaces of the leavening acid core.

In practice the core does not react with the coating and therefore, two discrete phases (e.g., core/shell particle morphology) are produced.

Once produced, the novel leavening acid compositions of the present invention may be incorporated in baking mixes for food products where the acids react with bases, typically sodium bicarbonate, to produce the leavening function that any known chemical leavening agent or biological leavener such as yeast would ordinarily provide. The inventive chemical leavening system of this invention may be incorporated into a baking powder product conveniently prepared by admixing the acid with an base as a dry powder mix. It is well known that baking powders in the dry powder form are best prepared together with fillers contributing to the bulk of the powder and aiding its measurement for actual use. Fillers such as starch, calcium sulfate or calcium carbonate are generally employed in baking powders of this invention. Conventional preservatives and fillers may be employed together with the baking powder composition of this invention as is known in the art.

Examples of food products which can incorporate the inventive compositions, include, but are not limited to the following: cake, including layer and pound cake; muffin; doughnut; bread; pastry; cookie; room temperature, refrigerated or frozen dough; brownie; hush puppy; pancake; waffle; pizza crust or roll. The food products may be stored at room temperature or at reduced temperatures, e.g., refrigerated or frozen storage conditions.

In use, when the baking mixes are heated, the leavening acids controllably release and react with the bases to produce a properly leavened food product. The use of the inventive coated leavening acids, particularly encapsulated monocalcium phosphate, provides a control release profile such that a particularly high quality leavened product is produced. The present invention enables the use of monocalcium phosphate alone as a leavening acid. This is a significant improvement as it contains no sodium, has a bland taste and reacts slowly enough to provided desired leavening properties.

Fresh dough can be prepared from the leavening systems of this invention in the conventional manner as has been practiced in the art. Typically the ingredients are mixed together in the dry state and may be stored for conventional time periods. It is preferable to refrigerate dry mixed materials if extended time periods occur between mixing and the preparation of the fresh dough. The dry mix is employed to prepare fresh dough by incorporating suitable liquids such as milk and shortening materials as is known in the art.

As is known in the art, the desired pH of the final baked good can be controlled by incorporating into fresh dough leavening acids and alkaline carbonate sources normally employed for that purpose in the art. Generally, the pH of the final baked product ranges from about 5.5 to about 9.0, preferably from about 6.9 to about 7.5. The amount of alkaline carbonate material added should be sufficient to provide a pH within the above-described ranges. Typically there is included from about 0.3% by weight to about 3% by weight of the edible, alkaline agent, based upon the weight of the powdered ingredients employed.

The invention will be better understood by reference to the following examples.

### Example 1

Into a 1 liter glass container is placed:
81 g of Geleol
4 g of Sucroester 7
500 g of demineralized water

The mixture is melted at 70-80°C under magnetic agitation then emulsified for 2 min at 80°C with the help of a homogenizer equipped with a mixing blade capable of a mixing speed of 14,000 rpm. To this emulsion, still under magnetic agitation, 300 g of demineralized water, previously heated to 80°C, is added. A homogenous and stable dispersion is obtained which is maintained at a temperature of 80-90°C under agitation.

400 g of monocalcium phosphate (MCP), monohydrate form powder is placed in a GLATT GPC G1 type fluid bed apparatus equipped with top nozzles. The size of the particles of the monocalcium phosphate is between 50 and 200µ, inclusive. The preceding dispersion, still maintained at 80-90°C, is then pumped and atomized into the GLATT GPC by a hot air current. The following film forming conditions are applied:
- release of fluidization air : 70 m3/h
- material temperature : 38-40°C
- atomization air pressure : 2 bar
- atomization air temperature : 70-75°C
- discharge of the coating emulsion : 7 g/mn
- atomization time : 126 mn
- drying : 10 mn
- material temperature during drying : 38°C
   Total quantity of atomized emulsion : 886 g

470 g of encapsulated monocalcium phosphate is recovered with a coating level of 17.5% with respect to the final product.

The dough rate of reaction (DRR) is a term that defines the speed of carbon dioxide evolved during mixing and holding of a dough prior to baking. It is determined by measuring the volume of carbon dioxide evolved from a standard dough formulation containing known quantities of leavening acid and baking soda under a constant temperature of 27°C in a modified Chittick Apparatus. The DRR is often used as a guide for selecting the type of leavening acid that is best suited for a particular product application. A low value for the DRR, i.e., less than 50 over 2, 6 and/or 10 minute reaction times, tends to indicate an excellent controlled reaction rate.

To measure the amount of CO₂ liberated upon reaction with sodium hydrogen carbonate for the Example 1 composition, 73.5 parts of a simulated dry dough mix containing flour, nonfat dry milk, salt and shortening, 0.75 parts of NaHCO₃ and 0.93 parts of the Example 1 composition are added to a reaction bomb. 43 parts of water are added and the contents are mixed. Using a Chittick Apparatus the amount of CO₂ evolved as compared to the total amount available to be evolved (DRR) at 2 minutes is 22.2; at 6 minutes is 25.6; and at 10 minutes is 30.0.

As a comparison, the DRR for the uncoated MCP at 2 minutes is 58.1; at 6 minutes is 62.1; and at 10 minutes is 63.0. The DRR for a commercially successful sodium aluminum phosphate leavening acid (Levair - Rhône-Poulenc Inc.) at 2 minutes is 24.0; at 6 minutes is 28.0; and at 10 minutes is 31.0.

To determine if the above Example leavening acid composition would work well in baking mixes, the following yellow cake mix is prepared:

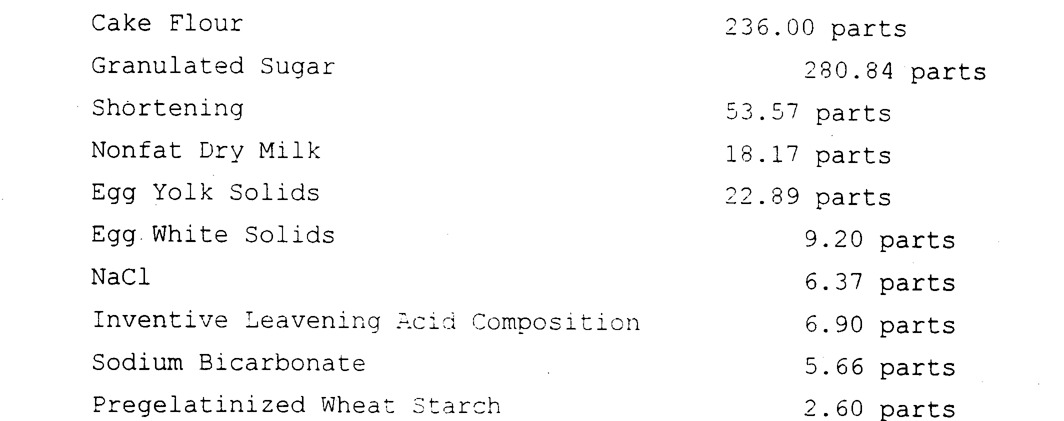

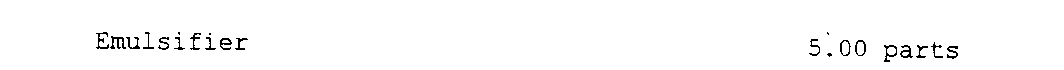

A batter is made by adding to the mixture first, 170.00 parts of water, then 142.00 parts of water. For one set of cakes, the batter was immediately added to a baking dish and baked at 375°F for 25 minutes to form a yellow cake. For a second set of cakes, the batter was chilled at 41°F for 22 hours then baked according to the above conditions to determine the stability of the encapsulated leavening acids.

To determine if the above batters could produce high quality cakes after baking, they were qualitatively and quantitatively analyzed by using the following criteria: Batter Specific Gravity, Batter Condition, Cake Specific Volume, Cake pH, Profile, Cake Color, Grain Consistency, Symmetry, Texture and Presence of Off-Color Specks.

The cake specific volume measured is 3.46, the grain is considered "fine" and the symmetry yields a round top. The remaining properties are evaluated as being excellent. Similar results are obtained for both the immediately baked dough as well as the refrigerated sample.

As a first comparison, the cake specific volume measured for the uncoated monocalcium phosphate is 2.50, the grain is considered "coarse" and the symmetry yields a dipped or flattened top. As a second comparison, the cake specific volume measured when using phosphate "coated" monocalcium phosphate is 2.90, the grain is considered "coarse" and the symmetry yields a slightly dipped or flattened top. The lower volumes for cake density, grain type and appearance when using these unencapsulated monocalcium phosphate materials demonstrate that their reaction rate is too rapid for practical use.

The cake specific volume measured for a commercially successful sodium aluminum phosphate leavening acid (Levair - Rhône-Poulenc Inc.) is 3.55, the grain is considered "fine" and the symmetry yields a round top. The inventive encapsulated materials perform comparably to this leavening acid.

### Example 2

Into a 1 liter glass container is placed:
280 g of Surelease, a ready-to-use aqueous solution containing from 24 to 26% dry material composed of:
+Ethylcellulose
+Coconut Oil
+Ammonium hydroxide
+Oleic acid
190 g of demineralized water

The mixture is agitated with a bar magnet at ambient temperature for 30 min.

500 g of MCP powder is placed in a GLATT GPC G1 type fluid bed apparatus equipped with a top nozzles. The size of the particles of this powder is between 50 and 200µ, inclusive. The preceding suspension, still kept agitated, is then pumped and atomized in the GLATT GPC G1 apparatus by an air current.

The following film forming conditions are applied:
- release of fluidization air : 70 m3/h
- powder temperature : 36-39°C
- atomization air pressure : 2 bar
- atomization air temperature : 24°C
- discharge of the coating emulsion : 4.9 g/mn
- atomization time : 99 mn
- drying : 6 mn
- powder temperature during drying : 36°C
   Total quantity of atomized emulsion : 471 g

577 g of coated monocalcium phosphate is recovered with a coating level of 12.6% with respect to the final product.

The amount of CO₂ evolved as compared to the total amount available to be evolved (DRR) at 2 minutes is 22.2; at 6 minutes is 25.6; and at 10 minutes is 31.0. Yellow cakes are made using the formulation and conditions discussed in Example 1. The cake specific volume measured is 3.64, the grain is considered "fine" and the symmetry yields a round top. The remaining properties are evaluated as being excellent. Similar results are obtained for both the immediately baked dough as well as the refrigerated sample.

### Example 3

Into a 1 liter glass container is placed:
- 30 g of sucroglyceride
- 500 g of demineralized water

The sucroglyceride is dispersed in the cold water under magnetic agitation then solubilized at 55°C under magnetic agitation. Coating of 500 g of MCP powder takes place using the procedures of Examples 1 and 2.

The following film forming conditions are applied:
- release of fluidization air : 95 m3/h
- powder temperature : 39-41°C
- atomization air pressure : 2 bar
- atomization temperature : 47°C
- discharge of the coating emulsion : 6.3 g/mn
- drying : 10 mn
- powder temperature during drying : 36°C
   Total quantity of atomized emulsion : 533 g

524 g of coated monocalcium phosphate is recovered with a coating level of 20.0% with respect to the final product.

The amount of CO₂ evolved as compared to the total amount available to be evolved (DRR) at 2 minutes is 21.0; at 6 minutes is 30.0; and at 10 minutes is 48.0. Yellow cakes are made using the formulation and conditions discussed in Example 1. The cake specific volume measured is 3.57, the grain is considered "fine" and the symmetry yields a round top. The remaining properties are evaluated as being excellent. Similar results are obtained for both the immediately baked dough as well as the refrigerated sample.

### Examples 4-28

The fluidized bed procedures described in Examples 1-3 are used to coat monocalcium phosphate (monohydrate) with several different coating materials. In addition the DRR and Cake Performance Testing as described in Example 1 are performed. The coating materials selected and the values for specific cake volume and DRR at 2 and 6 minutes are shown in Table 1.

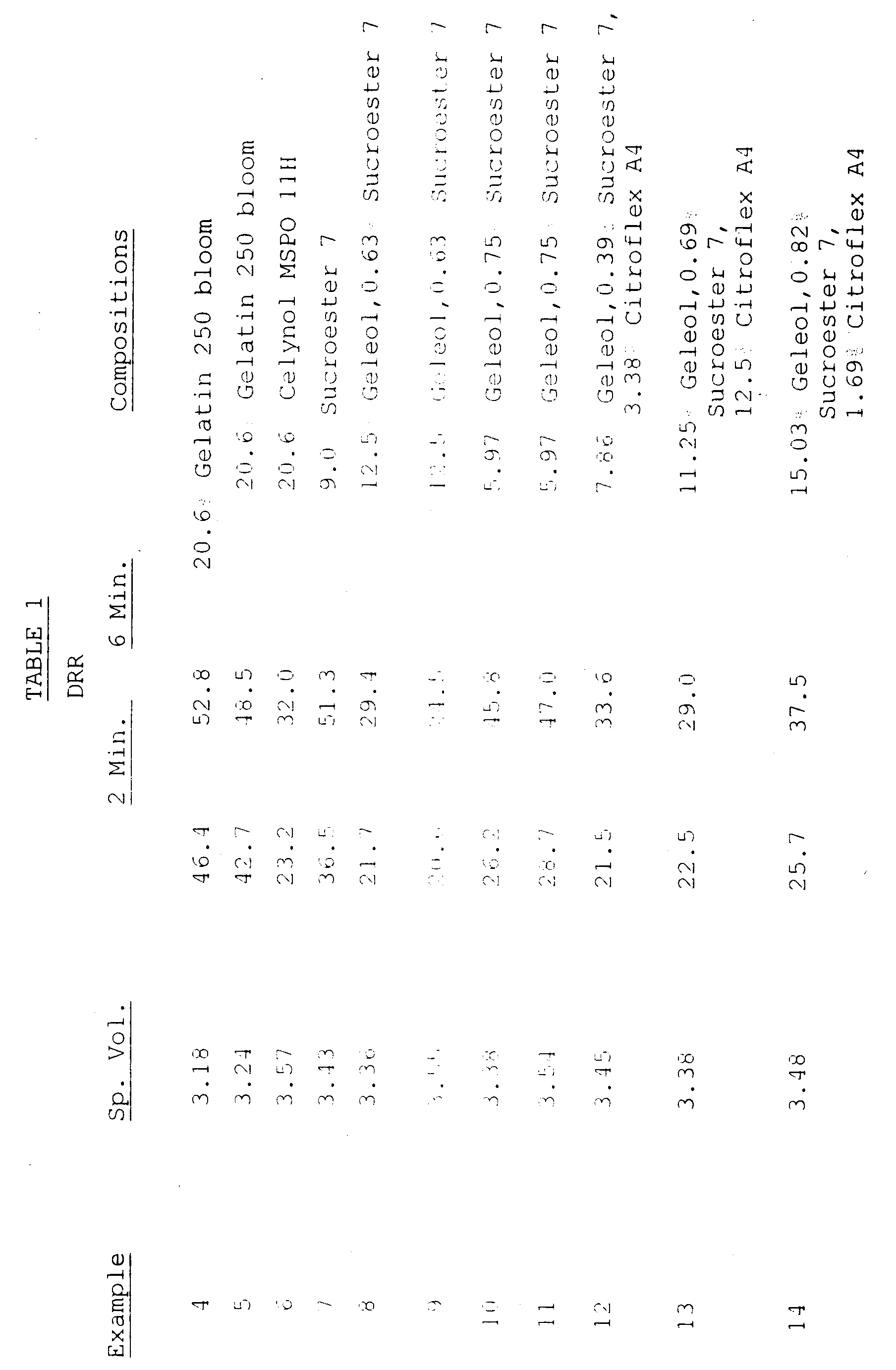

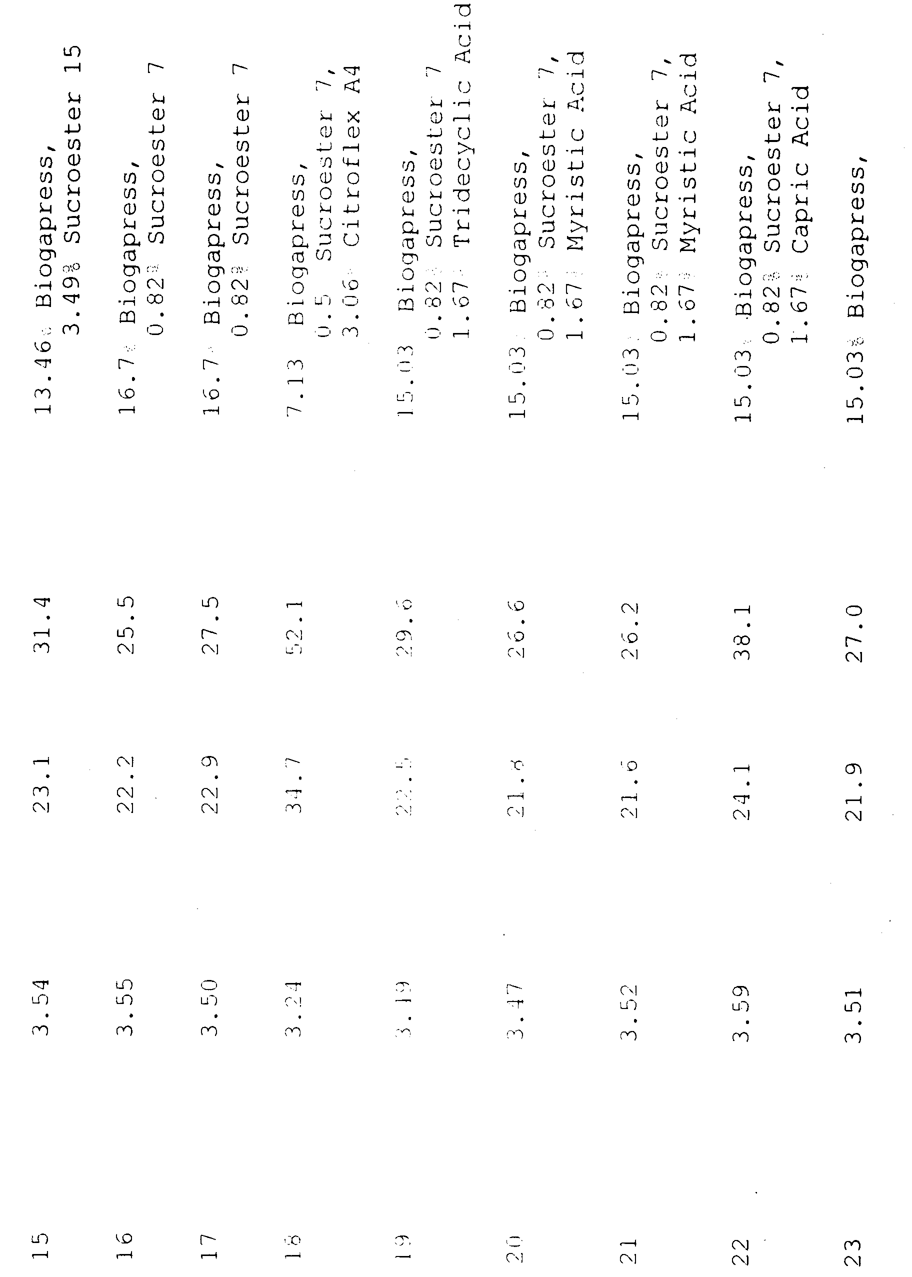

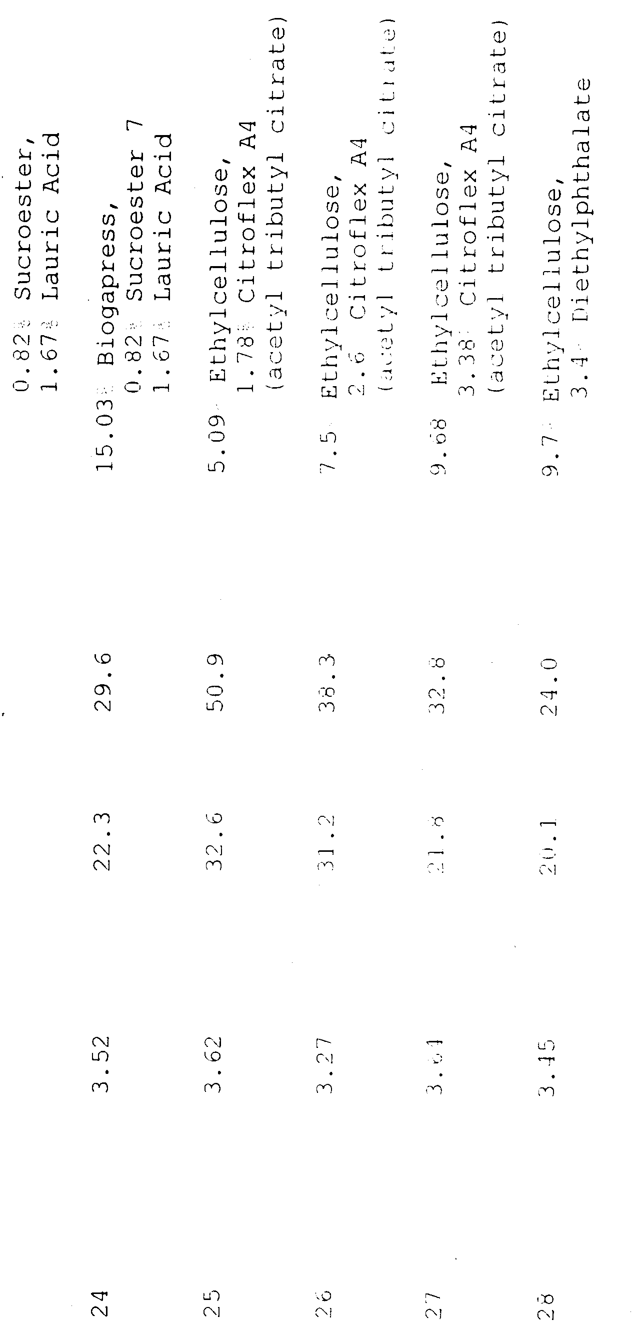

When qualitatively and quantitatively evaluating the compositions of Examples 4-28, satisfactory results were seen on both the cakes that were immediately baked, as well as those which had their batter stored for 22 hours. The cakes using the inventive encapsulated leavening acids demonstrated properties comparable to those which used Levair, a commercial monosodium aluminum phosphate leavening agent which is known for its excellent controlled release properties.

Having described the invention in detail and by reference to the preferred embodiments thereof, it will be apparent that modifications and variations are possible without departing from the scope of the appended claims.

## Claims

1. A composition of matter comprising:
(a) one or more leavening acids; and
(b) a coating surrounding said one or more leavening acids; said coating comprising:
(1) a barrier material; and
(2) a surface active agent or plasticizer material.

2. The composition according to claim 1 wherein said coating comprises a plasticizer material and a surface active agent.

3. The composition according to claim 1 wherein said one or more leavening acids are selected from the group consisting of monocalcium phosphate, monohydrate; monocalcium phosphate, anhydrous; sodium aluminum phosphate; a mixture of sodium aluminum phosphate with monocalcium phosphate; a mixture of sodium aluminum phosphate with aluminum sulfate; sodium acid pyrophosphate; sodium aluminum sulfate; potassium aluminum sulfate; ammonium alums; sodium alums; potassium alums; monosodium phosphate; monopotassium phosphate; tartaric acid; citric acid, fumaric acid; and glucono-delta-lactone and mixtures thereof.

4. The composition according to claim 3, wherein said leavening acid comprises monocalcium phosphate, monohydrate or monocalcium phosphate, anhydrous.

5. The composition according to claim 1 wherein said barrier material is selected from the group consisting of fatty acids, polyglycerol esters of fatty acids, monoglycerides, diglycerides, gelatins, starches, zein proteins, chitin, chitosan, amylopectin, hydrocolloids and mixtures thereof.

6. The composition according to claim 5 wherein said barrier material is selected from the group consisting of glyceryl monopalmitostearate, glyceryl palmitostearate, polyglyceryl palmitostearate, monoacetylated monoglyceride, hemisynthetic glyceride, sucroglycerides derived from coprah oil, sucroglycerides derived from palm oil, sucroglycerides derived from hydrogenated palm oil, sucroglycerldes derived from hydrogenated soybean oil, cellulose acetate phthalate, ethylcellulose aqueous dispersions, hydroxypropyl cellulose, sucrose palmitate, sucrose distearate, high amylose starch, high amylose waxy starch, pregelatinized starch, modified starch, waxy starch, pregelatinized waxy starch, modified waxy starch, carrageenan gum, pectin gum, xanthan gum, guar gum, locust bean gum, capric acid, lauric acid, myristic acid, tridecylclic acid, gelatins having a bloom strength of greater than 100, and mixtures thereof.

7. The composition according to claim 1, wherein said barrier material is selected from the group consisting of glyceryl monopalmitostearate; a mixture of ethylcellulose, coconut oil, ammonium hydroxide and oleic acid; and sucroglycerides.

8. The composition according to claim 1, wherein said surface active agent is selected from the group consisting of sucroesters, sucroglycerides, propylene glycol monoesters, ethoxylated monoglycerides, ethoxylated diglycerides, glycerol lacto esters of fatty acids, lecithin, polyoxyethylene sorbitan esters, sorbitan esters, stearoyl-2-lactylate, polyoxyethylene esters of fatty acids, acetylated monoglycerides and mixtures thereof.

9. The composition according to claim 8 wherein said surface active agent is selected from the group consisting of sucroesters, polyoxyethylene sorbitan esters, monoesters of long chain fatty acids and mixtures thereof.

10. The composition according to claim 2 wherein said plasticizer material is selected from the group consisting of acetyl tributyl citrate, tricalcium phosphate, dicalcium phosphate, and diethylphthalate and mixtures thereof.

11. The composition according to claim 1 wherein said leavening acid comprises between about 50 to about 98 percent by weight of said composition and said coating comprises between about 50 to about 2 percent by weight of said composition, the total weight of said composition being 100 weight percent.

12. The composition according to claim 1 wherein said coating is applied to said leavening acid by a method selected from the group consisting of fluidized bed coating, coacervation, interfacial polycondensation polymerization and solvent film coating.

13. The composition according to claim 12 wherein said coating is applied to said leavening acid by fluidized bed coating.

14. A composition of matter consisting essentially of:
(a) monocalcium phosphate; and
(b) a coating surrounding said monocalcium pnosphate, said coating comprising:
(1) a barrier composition; and
(2) a surface active agent or plasticizer material.

15. The composition according to claim 14 wherein said barrier composition is selected from the group consisting of glyceryl monopalmitostearate, glyceryl palmitostearate, polyglyceryl palmitostearate, monoacetylated monoglyceride, hemisynthetic glyceride, sucroglycerides derived from coprah oil, sucroglycerides derived from palm oil, sucroglycerides derived from hydrogenated palm oil, sucroglycerides derived from hydrogenated soybean oil, cellulose acetate phthalate, ethylcellulose aqueous dispersions, hydroxypropyl cellulose, sucrose palmitate, sucrose distearate, high amylose starch, high amylose waxy starch, pregelatinized starch, modified starch, waxy starch, pregelatinized waxy starch, modified waxy starch, carrageenan gum, pectin gum, xanthan gum, guar gum, locust bean gum, capric acid, lauric acid, myristic acid, tridecylclic acid, gelatins having a bloom strength of greater than 100, and mixtures thereof.

16. The composition according to claim 15 wherein said surface active agent is selected from the group consisting of sucroesters, sucroglycerides, propylene glycol monoesters, ethoxylated monoglycerides, ethoxylated diglycerides, glycerol lacto esters of fatty acids, lecithin, polyoxyethylene sorbitan esters, sorbitan esters, stearoyl-2-lactylate, polyoxyethylene esters of fatty acids, acetylated monoglycerides and mixtures thereof.

17. The composition according to claim 15 wherein said coating comprises a plasticizer material and a surface active agent.

18. A baking mix for preparing an edible baked good including a composition of matter comprising:
(a) one or more leavening acids; and
(b) a coating surrounding said one or more leavening acids; said coating comprising:
(1) a barrier material; and
(2) a surface active agent or a plasticizer material.

19. The baking mix according to claim 18 which is used to produce a cake, muffin, doughnut, bread, pastry, cookie, room temperature, refrigerated or frozen dough, brownie, hush puppy, pancake, waffle, pizza crust or roll.

20. The baking mix according to claim 18 wherein said coating comprises a plasticizer material and a surface active agent.

21. The baking mix according to claim 18 wherein said one or more leavening acids are selected from the group consisting of monocalcium phosphate, monohydrate; monocalcium phosphate, anhydrous; sodium aluminum phosphate; a mixture of sodium aluminum phosphate with monocalcium phosphate; a mixture of sodium aluminum phosphate with aluminum sulfate; sodium acid pyrophosphate; sodium aluminum sulfate; potassium aluminum sulfate; ammonium alums; sodium alums; potassium alums; monosodium phosphate; monopotassium phosphate; tartaric acid; citric acid; fumaric acid; and glucono-delta-lactone and mixtures thereof.

22. The baking mix according to claim 21 wherein said leavening acid comprises monocalcium phosphate, monohydrate or monocalcium phosphate, anhydrous.

23. The baking mix according to claim 18 wherein said barrier material is selected from the group consisting of fatty acids, polyglycerol esters of fatty acids, monoglycerides, diglycerides, gelatins, starches, zein proteins, chitin, chitosan, amylopectin, hydrocolloids and mixtures thereof.

24. The baking mix according to claim 23 wherein said barrier material is selected from the group consisting of glyceryl monopalmitostearate, glyceryl palmitostearate, polyglyceryl palmitostearate, monoacetylated monoglyceride, hemisynthetic glyceride, sucroglycerides derived from coprah oil, sucroglycerides derived from palm oil, sucroglycerides derived from hydrogenated palm oil, sucroglycerides derived from hydrogenated soybean oil, cellulose acetate phthalate, ethylcellulose aqueous dispersions, hydroxypropyl cellulose, sucrose palmitate, sucrose distearate, high amylose starch, high amylose waxy starch, pregelatinized starch, modified starch, waxy starch, pregelatinized waxy starch, modified waxy starch, carrageenan gum, pectin gum, xanthan gum, guar gum, locust bean gum, capric acid, lauric acid, myristic acid, tridecylclic acid, gelatins having a bloom strength of greater than 100, and mixtures thereof.

25. The baking mix according to claim 18 wherein said barrier material is selected from the group consisting of glyceryl monopalmitostearate; a mixture of ethylcellulose, coconut oil, ammonium hydroxide and oleic acid; and sucroglycerides.

26. The baking mix according to claim 18 wherein said surface active agent is selected from the group consisting of sucroesters, sucroglycerides, propylene glycol monoesters, ethoxylated monoglycerides, ethoxylated diglycerides, glycerol lacto esters of fatty acids, lecithin, polyoxyethylene sorbitan esters, sorbitan esters, stearoyl-2-lactylate, polyoxyethylene esters of fatty acids, acetylated monoglycerides and mixtures thereof.

27. The baking mix according to claim 26 wherein said surface active agent is selected from the group consisting of sucroesters, polyoxyethylene sorbitan esters, monoesters of long chain fatty acids and mixtures thereof.

28. The baking mix according to claim 20 wherein said plasticizer material is selected from the group consisting of acetyl tributyl citrate, tricalcium phosphate, dicalcium phosphate and diethylphthalate and mixtures thereof.

29. The baking mix according to claim 18, wherein said coating is applied to said leavening acid by a method selected from the group consisting of fluidized bed coating, coacervation, interfacial polycondensation polymerization and solvent film coating.

30. The baking mix according to claim 29 wherein said coating is applied to said leavening acid by fluidized bed coating.

31. The baking mix according to claim 18 wherein said composition of matter comprises between about 0.2 to about 4.0 parts by weight of said mix.

32. Encapsulated monocalcium phosphate wherein the encapsulating material is not solely a phosphate material.
